(19) Europäisches Patentamt
European Patent Office
Office européen des brevets

(11) **EP 4 756 683 A1**

(12) **EUROPEAN PATENT APPLICATION**

(43) Date of publication:
**10.06.2026 Bulletin 2026/24**

(21) Application number: **25219188.7**

(22) Date of filing: **27.11.2025**

(51) International Patent Classification (IPC):
**G06N 10/60** (2022.01)    **G06N 5/01** (2023.01)
**G06F 17/11** (2006.01)    **G06N 10/20** (2022.01)
**G06N 10/40** (2022.01)

(52) Cooperative Patent Classification (CPC):
**G06N 10/20; G06F 17/11; G06F 17/13;
G06F 17/18; G06N 5/01; G06N 10/60;** G06N 10/40

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **06.12.2024 US 202418972677**

(71) Applicant: **FUJITSU LIMITED
Kawasaki-shi, Kanagawa 211-8588 (JP)**

(72) Inventors:
• **KSHIRSAGAR, Rutuja
Santa Clara, 94054 (US)**
• **RENDON SUZUKI, Jesus Gumaro
Santa Clara, 94054 (US)**
• **TRAN, Quochoan
Santa Clara, 94054 (US)**

(74) Representative: **Haseltine Lake Kempner LLP
Cheapside House
138 Cheapside
London EC2V 6BJ (GB)**

(54) **QUANTUM COMPUTING INTEGRAL PROBABILITY EXTRACTION**

(57)    A method may include discretizing a partial differential equation with an initial value condition to obtain a linear equation. The method may also include scaling at least one discretization parameter of the linear equation to obtain a scaled linear equation. The method may include applying a quantum algorithm to the scaled linear equation to obtain a linear system with a preconditioned matrix. The method may further include performing a quantum singular value transformation to apply an inverse of the preconditioned matrix to obtain a solution. The method may include extracting an integral probability from the solution using an integral interpolation.

*FIG. 1*

## Description

### FIELD

The present disclosure generally relates to a quantum circuit and method for integral probability extraction.

### BACKGROUND

Quantum computing devices may include quantum bits ("qubits") capable of representing information as ones, zeroes, or as both ones and zeroes simultaneously. Quantum algorithms implemented on quantum computing devices may leverage the properties of qubits, such as superposition and entanglement, to more efficiently and/or more accurately solve some types of problems (e.g., differential equations, optimizations, graph partitioning, quadratic programming, etc.) than classical computers (e.g., provide a quantum advantage). Preconditioning quantum algorithms may reduce the number of qubits used to implement a quantum algorithm and/or may improve quantum advantage.

The subject matter claimed in the present disclosure is not limited to embodiments that solve any disadvantages or that operate only in environments such as those described above. Rather, this background is only provided to illustrate example technology areas where some embodiments described in the present disclosure may be practiced.

### SUMMARY

According to an aspect of an embodiment, a method may include discretizing a partial differential equation with an initial value condition to obtain a linear equation. In some embodiments, the method may include scaling at least one discretization parameter of the linear equation to obtain a scaled linear equation. The method may also include applying a quantum algorithm to the scaled linear equation to obtain a linear system with a preconditioned matrix. In some embodiments, the method may include performing a quantum singular value transformation (QSVT) using a quantum circuit in a quantum computing device to apply an inverse of the preconditioned matrix to obtain a solution. The method may further include extracting an integral probability from the solution using an integral interpolation.

The objects and advantages of the embodiments will be realized and achieved at least by the elements, features, and combinations particularly pointed out in the claims. It is to be understood that both the foregoing general description and the following detailed description are explanatory and are not restrictive of the invention, as claimed.

### BRIEF DESCRIPTION OF THE DRAWINGS

Example embodiments will be described and explained with additional specificity and detail through the use of the accompanying drawings in which:

FIG. 1 illustrates an example operating environment of an integral probability extraction system, in accordance with one or more embodiments of the present disclosure;
FIG. 2 illustrates an example integral probability extraction system, in accordance with one or more embodiments of the present disclosure;
FIG. 3 illustrates an example quantum circuit, in accordance with one or more embodiments of the present disclosure;
FIG. 4 illustrates a flowchart of an example method to extract an integral probability, in accordance with one or more embodiments of the present disclosure; and
FIG. 5 illustrates a block diagram of an example computing system, in accordance with one or more embodiments of the present disclosure

### DETAILED DESCRIPTION

Quantum computing devices use quantum bits, or "qubits," which may be configured to store values of 0, 1, or a superposition of both 0 and 1. Because qubits are capable of simultaneously storing multiple values (e.g., existing in multiple states), quantum computing devices may be capable of performing calculations more quickly and/or more accurately than classical computers that only use classical bits capable of storing values of either 0 or 1. As a result, quantum computing devices may improve computations in various technology fields such as finance, physics, chemistry, drug discovery, and/or machine learning.

Integral probability extraction may involve determining the probability that a quantum system is in a specific state after measurement (e.g., based on the amplitude of the quantum system). For example, in quantum algorithms (e.g., Grover's algorithm), integral probability extraction may be used to find and isolate the amplitude of a target state or solution. Integral probability extraction may improve the efficiency of quantum algorithms to perform tasks like searching and optimization by enabling quantum computing devices to converge on solutions more quickly than classical methods and/or traditional quantum methods.

Integral probability extraction may be difficult and/or impractical because quantum states are probabilistic and may require numerous measurements to accurately determine specific amplitudes. For example, measuring low-probability states precisely may be inefficient, as many repetitions may be needed to achieve a statistically meaningful result. Integral probability extraction may also suffer from noise and/or error introduced by quantum decoherence. Therefore, it may be beneficial to apply a method of integral probability extraction that reduces the number of qubits used on a quantum circuit, as using fewer qubits may reduce noise.

Some embodiments of the present disclosure may describe a method and/or system to extract an integral probability using a quantum computing device. For example, the disclosure may describe a method to discretize a partial differential equation with an initial value condition to obtain a linear equation. In these and other embodiments, at least one discretization parameter of the linear equation may be scaled to obtain a scaled linear equation. In some embodiments, a quantum algorithm may be applied to the scaled linear equation to obtain a linear system with a preconditioned matrix. In these and other embodiments, a quantum singular value transformation (QSVT) may be used by a quantum circuit of a quantum computing device to apply an inverse of the preconditioned matrix to obtain a solution. An integral probability may be extracted from the solution using an integral interpolation. In some embodiments, computing processes and/or performance of quantum computing devices may be improved by more efficiently and/or accurately extracting integral probabilities according to the present disclosure. For example, integral probability extraction may improve quantum computing processes used for financial option pricing by reducing the number of qubits used to solve differential equations that model financial asset values over time. In some embodiments, the method of the present disclosure may reduce the number of iterations a quantum algorithm may be performed on a quantum circuit of a quantum computing device to extract an integral probability with an accuracy above a threshold (e.g., to achieve a specified statistical confidence level). Embodiments of the present disclosure are explained with reference to the accompanying figures.

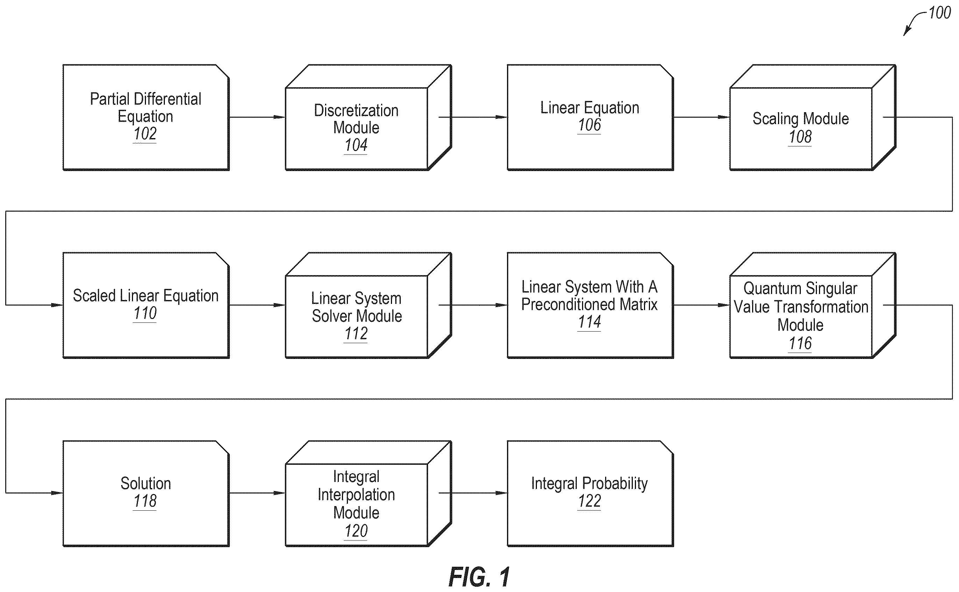

FIG. 1 illustrates an example operating environment 100 of an integral probability extraction system according to one or more embodiments of the present disclosure. The operating environment 100 may include a discretization module 104, a scaling module 108, a linear system solver module 112, a quantum singular value transformation module 116 (QSVT module 116), and an integral interpolation module 120 that are configured to obtain as input and/or output a partial differential equation 102, a linear equation 106, a scaled linear equation 110, a linear system with a preconditioned matrix 114, a solution 118, and an integral probability 122.

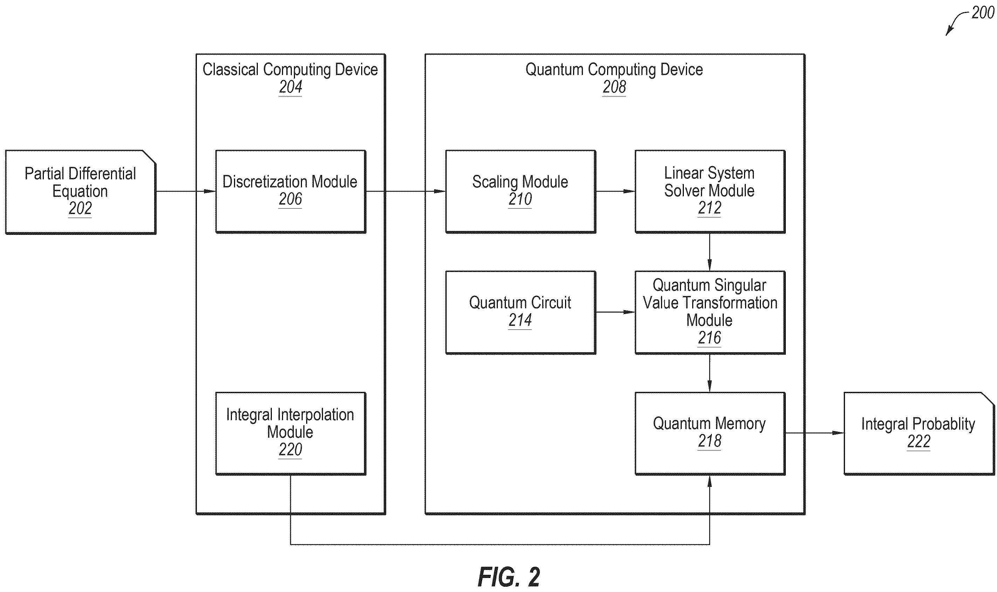

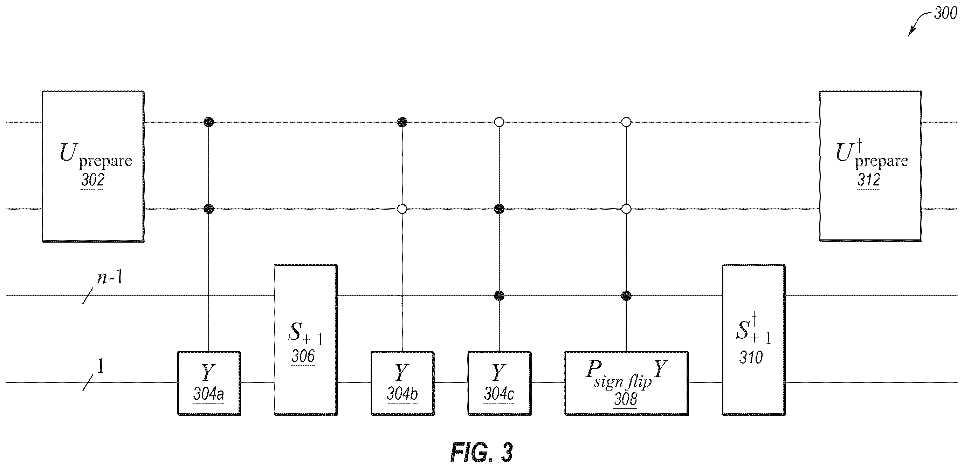

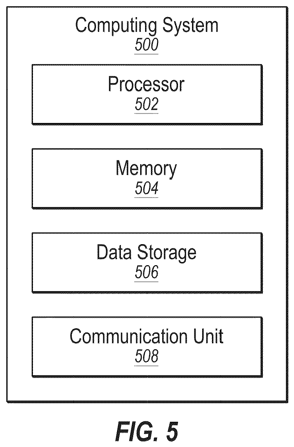

In some embodiments, the discretization module 104, the scaling module 108, the linear system solver module 112, the QSVT module 116, and/or the integral interpolation module 120 (collectively, "the computing modules") may include code and routines configured to cause performance of the operations described with respect to the modules. In some embodiments, one or more of the computing modules may be implemented using hardware including one or more processors, central processing units (CPUs), graphics processing units (GPUs), data processing units (DPUs), parallel processing units (PPUs), microprocessors (e.g., to perform or control performance of one or more operations), field-programmable gate arrays (FPGA), application-specific integrated circuits (ASICs), accelerators (e.g., deep learning accelerators (DLAs)), one or more programmable vision accelerators (PVAs), which may include one or more vector processing units (VPUs), one or more direct memory access (DMA) systems, one or more pixel processing engines (PPEs), etc., and/or other processor types. In these and other embodiments, the computing modules may be implemented using a combination of hardware and software. In the present disclosure, operations described as being performed by the computing modules may include operations that the modules may direct one or more corresponding computing system to perform. The computing modules may be configured to perform a series of operations with respect to the partial differential equation 102, the linear equation 106, the scaled linear equation 110, the linear system with a preconditioned matrix 114, the solution 118, and the integral probability 122. In these or other embodiments, the computing modules may be implemented by one or more quantum circuits, such as that described in further detail with respect to FIG. 3, and/or by one or more computing systems, such as that described in further detail with respect to FIG. 2 and/or FIG. 5.

In some embodiments, the partial differential equation 102 may be a mathematical equation that includes two or more independent variables, an unknown function dependent on those independent variables, and partial derivatives of the unknown function (e.g., a function without an exact formula or relationship that may be solved using given data and/or constraints) with respect to the independent variables. In some embodiments, the partial differential equation 102 may be a parabolic differential equation. The partial differential equation 102 may be any equation that models a process or phenomena where a quantity changes over time. For example, the partial differential equation 102 may model how heat (e.g., as measured by temperature) diffuses through a given region over time. In some embodiments, the partial differential equation 102 may model changes in financial asset value over time. For example, the partial differential equation 102 may be based on the Black-Scholes model for pricing financial options. In some embodiments, the Black-Scholes model may use a differential equation to describe how the price of a financial option changes over time by accounting for factors such as asset price, volatility, time to expiration, interest rates, etc. In some embodiments, the partial differential equation 102 may be based on the Heston model and/or another financial option pricing model that incorporates stochastic volatility.

In some embodiments, the partial differential equation 102 may be a Black-Scholes equation modified to price Asian options, such as Equation 1 below. Asian options may include financial options where the final payoff depends on the average price of the underlying asset over time, as compared to other financial options where the payoff depends solely on the price of the underlying asset at expiration. Because Asian options may be less volatile than other financial options (e.g., American options and European options), Asian options may be used within a commodities derivatives market. Conventional methods of valuing Asian options using a Black-Scholes framework have typically involved complex analytical and/or numerical methods such as Monte Carlo simulations.

$$\frac{\partial \psi}{\partial \tau_1} - \frac{1}{2}\sigma^2\eta^2 \frac{\partial^2 \psi}{\partial \eta^2} - \left(\frac{W(\tau_1)}{T} - (r - q)\eta\right)\frac{\partial \psi}{\partial \eta} = 0 \qquad \text{(Equation 1)}.$$

With respect to Equation 1, in some embodiments: $\psi$ may represent adjusted payoff, $\eta$ may represent the ratio of the average versus underlying (e.g., $I/ST$) for average-strike options or the ration of the average minus the strike (e.g., $(I-K)/ST$) for the average-rate options, S may represent the price of the underlying asset, K may represent the strike price for average-rate Asian options, $\tau_1$ may represent the time variable after applying time reversal (e.g., $\tau_1 = T-t$), $W(\tau_1)$ may represent a weight function for the average $I(\tau_1) = \int_0^{\tau_1} W(\tau_1')S(\tau_1')\, dT_1'$, $\sigma$ may represent volatility, $r$ may represent the constant risk-free rate, $q$ may represent the constant dividend yield, and $T$ may represent the expiry time. In some embodiments, the first term of Equation 1 may correspond to a time derivative, the second term may correspond to a second ratio derivative, and/or the third term may correspond to a first ratio derivative.

In some embodiments, a time reversal technique may be applied to the partial differential equation 102 to transform the partial differential equation 102 into a more solvable form. For example, the payoffs for different types of Asian options (e.g., average-rate and average-strike) may be defined at the start such that the payoffs drive the solution of the partial differential equation 102. In these and other embodiments, once the partial differential equation 102 is solved, the value of a financial option may be calculated using a formula incorporating the average price of the underlying asset adjusted for time and dividends. Thus, in some embodiments, applying a time reversal to the partial differential equation 102 may improve the accuracy of pricing Asian options using the partial differential equation 102.

In some embodiments, quantum preconditioning for solving linear systems may be applied to the partial differential equation 102. For example, quantum preconditioning may be used to improve the conditioning of a linear system by reformulating the linear system into an equivalent system with a smaller condition number, thereby making the partial differential equation 102 less sensitive to small changes and/or input error and therefore easier to solve.

In some embodiments, a discretization module 104 may discretize the partial differential equation 102 to obtain a linear equation 106. For example, the discretization module 104 may discretize the time derivative of the partial differential equation 102 of Equation 1. In some embodiments, the discretization module 104 may also discretize the first ratio derivative and/or the second ratio derivative. In some embodiments, the discretization module 104 may be included in a quantum computing device and may be implemented by a quantum circuit.

In some embodiments, the discretization module 104 may discretize the partial differential equation 102 using a finite difference method. For example, the discretization module 104 may discretize the time derivative of the partial differential equation 102 using a central difference method with Dirichlet (e.g., fixed) boundary conditions. In some embodiments, the discretization module 104 may use a quantum circuit of a quantum computing device to perform a discretization. For example, the discretization module 104 may use the quantum circuit 300 described further below with respect to FIG. 3.

In some embodiments, the linear equation 106 may be part of a linear system (e.g., a system of linear equations) that approximates the behavior of the partial differential equation 102 on a discretized domain. In some embodiments, the linear equation 106 may use terabytes or petabytes of data to solve. In some embodiments, the linear equation 106 may be implicitly defined and therefore may use a relatively large amount computational resources to solve such that a classical computing device alone may be impractical.

In some embodiments, a scaling module 108 may scale at least one discretization parameter of the linear equation 106 to obtain a scaled linear equation 110. For example, the scaling module 108 may transform at least one variable of the linear equation 106 using a scalar (e.g., multiplying by a constant). In some embodiments, the linear equation 106 may be scaled by a factor of $\delta_{\tau_1}$, wherein $\delta_{\tau_1}$ is the matrix spacing of the discretized time derivative of Equation 1. In these and other embodiments, the scaling module 108 may improve integral interpolation extraction by increasing numerical stability of the linear equation 106 when being solved.

In some embodiments, a linear system with a preconditioned matrix 114 may be obtained by applying a quantum algorithm configured to solve a linear system to the scaled linear equation 110 using a linear system solver module 112. For example, a Harrow-Hassidim-Lloyd (HHL) algorithm may be the quantum algorithm. In some embodiments, the quantum algorithm may be exponentially faster than classical algorithms for the same task (e.g., solving the scaled linear equation 110). In some embodiments, the linear system solver module 112 may apply the quantum algorithm using a quantum computing device by encoding the scaled linear equation 110 as a quantum state, utilizing quantum phase estimation to estimate the eigenvalues of the matrix involves, and/or performing controlled rotations based on the eigenvalues to obtain a solution vector (e.g., the preconditioned matrix 114).

In some embodiments, a solution 118 may be obtained by performing a quantum singular value transformation (QSVT) to apply an inverse of the preconditioned matrix 114 using a QSVT module 116. In some embodiments, the QSVT module 116 may apply quantum signal processing. In some embodiments, the QSVT module 116 may use a quantum circuit of a quantum computing device to perform a QSVT. For example, the QSVT module 116 may use the quantum circuit 300 described further below with respect to FIG. 3. In some embodiments, the solution 118 may include a quantum state representing a polynomial transformation of the preconditioned matrix 114. In these and other embodiments, the solution 118 may be stored in a quantum memory of a quantum computing device.

In some embodiments, an integral probability 122 may be extracted (e.g., obtained) from the solution 118 using an integral interpolation module 120. In some embodiments, the integral interpolation module 120 may be configured to extract the integral probability 122 from a smooth function. For example, the integral probability 122 may be extracted by integrating a number of points and/or values that scale with $\tilde{O}(\log(1/\varepsilon))$, where $\varepsilon$ may be the error in the solution 118.

In some embodiments, the integral interpolation module 120 may perform a Chebyshev interpolation on the solution 118. In some embodiments, the integral interpolation module 120 may perform a mock-Chebyshev interpolation (e.g., a technique mimicking Chebyshev interpolation for data including a subset of evenly spaced collocation points) on the solution 118. In some embodiments, the integral interpolation may be a binary decomposition. For example, the integral interpolation may be a square amplitude integral estimation with binary segmentation. In some embodiments, the integral probability 122 may be used to determine the price of a financial option. In some embodiments, the integral interpolation module 120 may be configured to implement Equation 2 below.

$$\mathbf{V}_{\text{pert}} a' = f' \quad \text{(Equation 2)}.$$

With respect to Equation 2, in some embodiments, $\mathbf{V}_{\text{pert}}$ may correspond to a perturbed Chebshev-Vandermonde matrix, $a'$ may correspond to a vector of states after applying a perturbation, and f' may correspond to at least one integral sample with error (e.g., as introduced from a finite-resources amplitude estimation). In some embodiments, the solution of a linear system using Equation 2 may be an interpolating polynomial. In these and other embodiments, the interpolating polynomial may be used to price at least one financial option.

Modifications, additions, or omissions may be made to the operating environment 100 without departing from the scope of the disclosure. For example, the designations of different elements in the manner described is meant to help explain concepts described herein and is not limiting. For instance, in some embodiments, the operating environment 100 may be delineated in the specific manner described to help with explaining concepts described herein, but such delineation is not meant to be limiting. Further, the operating environment 100 may include any number of other elements or may be implemented within other systems or contexts than those described.

FIG. 2 illustrates an integral probability extraction system 200 (system 200). The system 200 may include a classical computing device 204 to obtain a partial differential equation 202. The classical computing device 204 may include various devices in which computing operations can be carried out, such as computer systems or components thereof. For example, the classical computing device 204 may be any computer and/or computing device that uses classic binary bits for operations, where a classic binary bit is a bit that includes only two states 1 or 0. In some embodiments, the classical computing device 204 may be any electronic or digital device that includes hardware and programming to utilize at least one classic binary bit for processing and does not use quantum bits or qubits for processing. In some embodiments, the classical computing device 204 may include a first classical computing device including a discretization module 206 to discretize a partial differential equation with an initial value condition to obtain a linear equation and/or a second classical computing device including an integral interpolation module 220 configured to extract an integral probability from the solution using an integral interpolation. In some embodiments, the discretization module 206 and the integral interpolation module 220 may be implemented on the same classical computing device (e.g., the classical computing device 204).

As used herein, the term classical computing device 204 is not limited to a device implemented with integrated circuits, but broadly refers to a processor, a server, a microcontroller, a microcomputer, a programmable logic controller (PLC), an application specific integrated circuit (ASIC), and other programmable circuits. In some embodiments, the classical computing device 204 may include a processor, a memory, a data storage, a communication unit, and/or any other computing modules. For example, the classical computing device 204 may include one or more computers, servers, or other known computing devices as described. Some examples of a classical computing device 204 include a desktop computer, laptop computer, a tablet computer, a server computer such as a rack-mounted server, a mobile phone, a smartphone, a network device, telecommunications equipment, a single board computer (SBC), a system-on-a-chip (SOC), a microcontroller unit (MCU), and any other electronic or digital device with a processor. In some embodiments, the classical computing device 204 may include computer peripherals associated with a user interface such as a computer mouse, a keyboard, and/or a scanner. Furthermore, in some embodiments, the classical computing device 204 may include output channels such as a user interface monitor and/or a printer.

In some embodiments, the classical computing device 204 may include a discretization module 206 to accept the partial differential equation 202 as input and to discretize the partial differential equation 202 to obtain a linear equation such as the linear equation 106 illustrated in FIG. 1. The classical computing device 204 may include any configuration of non-quantum processing devices and/or systems. For example, the classical computing device 204 may include one or more elements of the computing system 500 of FIG. 5. In some embodiments, the partial differential equation 202 may be provided to the classical computing device 204 via one or more physical networks, cloud networks, Random Access Memory (RAM) drives, flash memory devices (e.g., solid state memory devices), and/or any other way by which data may be transferred between devices and/or systems.

In some embodiments, the classical computing device 204 may be communicatively coupled to a quantum computing device 208. The classical computing device 204 may provide instructions to, preprocess data for, and interpret results from the quantum computing device 208. For example, the classical computing device 204 may be arranged to instruct the quantum computing device 208 to prepare quantum states and/or to perform measurements on those quantum states, according to instructions stored in memory on the classical computing device 204. In some embodiments, the classical computing device 204 and the quantum computing device 208 may be communicatively coupled through cloud services such as where the classical computing device 204 sends computational tasks to a remote quantum computing device 208 over a network.

In some embodiments, the quantum computing device 208 may include quantum hardware. For example, the quantum hardware may include a quantum processor that includes one or more qubits and an ability to store the qubits. In some embodiments, the qubits may be physically implemented using, for example, photons, trapped ions, electrons, one or more nuclei, superconductor circuits, and/or quantum dots. For example, the qubits may be physically implemented in a variety of ways including the polarization state of a single photon, the spatial optical path of a single photon, two differing energy states of an atom or an ion, and/or the spin orientation of a particle or multiple particles, such as a nucleus. Storing the qubits may include maintaining the qubits in a suitable environment to allow quantum computation, for example by supercooling the qubits. In some embodiments, the quantum computing device 208 may be a noisy intermediate-scale quantum (NISQ) device and/or any other computing device configured to operate using qubits.

In some embodiments, the quantum computing device 208 may include a quantum circuit 214. The quantum circuit 214 may be formed by a suitable arrangement of quantum logic gates and may operate on the qubits. For example, the quantum circuit 214 may, in some embodiments, be the quantum circuit 300 described with respect to FIG. 3. In some embodiments, the quantum circuit 214 may determine properties of electromagnetic waves that may be applied to the qubits to adjust the states of the qubits.

In some embodiments, the computing modules may perform the same or similar functions as those described in connection to FIG. 1. For example, the discretization module 206 may perform the same or similar functions as those described with respect to the discretization module 104, the scaling module 210 may perform the same or similar functions as those described with respect to the scaling module 108, the linear system solver module 212 may perform the same or similar functions as those described with respect to the linear system solver module 112, the Quantum Singular Value Transformation Module 216 may perform the same or similar functions as those described with respect to the Quantum Singular Value Transformation Module 116, and/or the integral interpolation module 220 may perform the same or similar functions as those described with respect to the integral interpolation module 120.

An example of the operation of the integral probability extraction system is now provided. In some embodiments, a partial differential equation 202 representing an Asian financial option may be provided to the system such that the price/value of the Asian financial option may be determined. A Black-Scholes equation for pricing Asian financial options may be the partial differential equation 202 provided to the discretization module 206 of the classical computing device 204. The discretization module 206 may discretize the time derivative of the Black-Scholes equation for pricing Asian financial options resulting in a linear equation. In some embodiments, the discretization module 206 may also discretize the first ratio derivative and/or the second ratio derivative. In some embodiments, the linear equation may be provided to the quantum computing device 208, which may include the scaling module 210, the linear system solver module 212, and/or the QSVT module 216. In these and other embodiments, the quantum computing device 208 may include a quantum circuit 214 and/or a quantum memory 218. For example, the quantum circuit 214 may be configured to cause the QSVT module 216 to perform a QSVT and/or to store the resulting solution on the quantum memory 218. In some embodiments, an integral interpolation module 220, which may be a component of a first classical computing device and/or a second classical computing device (e.g., the classical computing device 204), may be used to extract the integral probability 222 from the quantum memory 218 of the quantum computing device 208. In some embodiments, the integral probability 222 may be a representation of a quantum system such that the probability corresponds to the likelihood of finding a particle within a defined area when performing a quantum measurement. In some embodiments, the integral probability 222 may be a probability amplitude. In these and other embodiments, the integral probability 222 may be used to price the Asian financial option.

Asian financial options may be difficult to price because their payoff is based on the average price of an underlying asset over time, making them path dependent. For example, an Asian option may be priced as the arithmetic mean or the geometric mean of an underlying stock's price as measured every 30 days, every 60 days, every 90 days, etc. Accordingly, complex mathematical calculations may be used to accurately value Asian financial options. Systems configured to perform solely classical methods (e.g., methods capable of being performed by classical computers) and/or traditional quantum methods (e.g., methods capable of being performed by quantum computers without the integral probability extraction of the present disclosure) may be inefficient and/or inaccurate for pricing Asian financial options. For example, classical methods and/or traditional quantum methods may use a larger number of qubits to obtain a solution, thereby increasing noise and/or error. In some embodiments, classical methods and/or traditional quantum methods may include a larger gate cost (e.g., may include a greater number and/or a greater complexity of classical or quantum logic gates). Thus, the integral probability extraction system of the present disclosure may provide a quantum advantage and/or an exponential advantage, for example, by pricing Asian financial options more efficiently and/or more accurately. In some embodiments, the integral probability extraction of the present disclosure may include a lower gate cost and/or a lower qubit count than classical and/or other quantum methods.

Table 1.

| Method | Gate cost | Qubit count |
|---|---|---|
| Integral probability extraction (present disclosure) | $\tilde{O}(\text{polylog}(1/\varepsilon))$ | $\tilde{O}(\text{polylog}(1/\varepsilon))$ |
| Valuation tree | $\tilde{O}(1/\varepsilon^2)$ | $\tilde{O}(1/\varepsilon)$ |
| Semi-digital encoding | $\tilde{O}(1/\varepsilon^4)$ | $\tilde{O}(1/\varepsilon^2)$ |
| Quantum-inspired sampling | $\tilde{O}(1/\varepsilon^6)$ | N/A |
| Time-domain sub-sampling | $\tilde{O}(1/\varepsilon^4)$ | N/A |
| Quantized sub-sampling | $\tilde{O}(1/\varepsilon^3)$ | $\tilde{O}(1/\varepsilon^2)$ |
| Standard quantum Monte-Carlo integration | $\tilde{O}(1/\varepsilon^2)$ | $\tilde{O}(1/\varepsilon)$ |
| Standard classical Monte-Carlo integration | $\tilde{O}(1/\varepsilon^3)$ | N/A |

For example, Table 1 above includes a list of classical and quantum methods with corresponding gate costs and, as applicable to the quantum methods, qubit counts. In some embodiments, the gate cost and/or qubit count of the integral probability extraction of the present disclosure as shown in Table 1 may indicate the quantum advantage and/or exponential advantage of the method of the present disclosure compared to classical methods and traditional quantum methods for pricing financial options and/or for obtaining solution amplitudes from a solution memory.

Modifications, additions, or omissions may be made to the system 200 without departing from the scope of the disclosure. For example, the classical computing device 204 and/or the quantum computing device 208 may include one or more additional components. Additionally or alternatively, the system 200 may include one or more additional components.

FIG. 3 illustrates an example quantum circuit 300, according to one or more embodiments of the present disclosure. In some embodiments, the quantum circuit 300 may be an example of the quantum circuit 214 of FIG. 2. In some embodiments, the quantum circuit 300 may include $n_\tau$ number of qubits, wherein $n_\tau$ is at least four qubits. In some embodiments, the quantum circuit 300 may operate on a quantum computing device that may include a qubit count of $\tilde{O}((1/\varepsilon))$, wherein $\varepsilon$ represents additive error of the solution. In some embodiments, the quantum circuit 300 may operate on a quantum computing device that may include a qubit count of $\tilde{O}(\text{polylog}(1/\varepsilon))$, wherein $\varepsilon$ represents additive error of the solution. In some embodiments, the quantum circuit 300 may be configured to implement Equation 3, which may correspond to the discretized time derivative of Equation 1 (e.g., $\tilde{C}_{\tau 1}$).

$$\tilde{C}_{\tau_1} = \frac{i}{2\delta_t} I_{2^{n-1}} \otimes Y + \frac{i}{2\delta_t} S_{+1}\left(I_{2^{n-1}} \otimes Y + C^{n-1}Y - C^{n-1}(-Y)\right)S^\dagger{}_{+1} \qquad \text{(Equation 3)}.$$

With respect to Equation 3, in some embodiments, $\delta_t$ may correspond to the spacing in at least one Dirichlet boundary condition, $I_{2^{n-1}}$ may correspond to an identity gate, $Y$ may correspond to a unitary gate, $S_{+1}$ may correspond to a first unitary gate that implements a cyclic shift (e.g., to the right), $C^{n-1}Y$ may correspond to a controlled $Y$ unitary gate, and

$S^\dagger_{+1}$ may correspond to a second unitary gate that implements a cyclic shift (e.g., to the left).

In some embodiments, the quantum circuit 300 may operate to perform quantum computations using a series of quantum logic gates that operate on at least one qubit. For example, the quantum logic gates may manipulate the quantum states of at least four qubits. In some embodiments, the quantum circuit 300 may include at least one controlled quantum logic gate. In some embodiments, the quantum states of the at least four qubits may include a basic state (e.g., 0 or 1), a superposition state that may be represented by any value between 0 and 1, and/or an entangled state where the state of one qubit is based on the state of another qubit. In some embodiments, the quantum states of the at least four qubits may be adjusted. For example, a quantum logic gate may adjust the superposition state of a qubit by rotating the state of the qubit from a first position to a second position. In these and other embodiments, a quantum logic gate may represent an operation that may be performed on a qubit. As such, the quantum logic gate may be implemented by controlling quantum hardware that encodes qubits, such as by manipulating the energy levels of atoms, ions, photons, and/or superconducting circuits that form the quantum hardware. In these and other embodiments, the quantum hardware may be controlled by application of electromagnetic waves, such as by laser, microwaves, or other electromagnetic waves.

In some embodiments, the quantum logic gates may be organized in a specific manner to implement a quantum algorithm. For example, a quantum algorithm may be written to perform a specific task such as a QSVT. In some embodiments, the quantum algorithm may be represented by a specific set of quantum logic gates organized in a specific manner that encodes variables and operations of the quantum algorithm into a sequence of quantum logic gates. In these and other embodiments, the quantum logic gates may be unitary quantum logic gates. For example, a unitary quantum logic gate may be a basic operation performed on a qubit that may be represented by a unitary matrix such that total probability of the quantum system may be preserved. In these and other embodiments, unitary quantum logic gates may be reversible operations (e.g., operations that may control the manipulation of quantum states without any loss of information corresponding to a quantum system).

In some embodiments, the quantum circuit 300 may include a first unitary quantum logic gate 302 configured to prepare states of at least two qubits of the at least four qubits. In these and other embodiments, the first unitary quantum logic gate 302 may be represented as $U_{prepare}$. In some embodiments, the first unitary quantum logic gate 302 may set at least two qubits of the at least four qubits in the quantum circuit 300 to prepared (e.g., initialized) states. For example, the first unitary quantum logic gate 302 may set a qubit to a superposition state characterized by an amplitude and one or more phase parameters.

In some embodiments, the quantum circuit 300 may include one or more Y gates 304a, 304b, 304c ("Y gates 304"). For example, the Y gates 304 may be used to implement phase shifts as part of a QSVT. In some embodiments, the Y gates 304 may implement a rotation around the y-axis of a Bloch sphere (e.g., a geometrical representation of all possible states of a qubit). In some embodiments, the Y gates 304 may be implemented on the least significant qubit (LSQb) of the quantum circuit 300. In some embodiments, the Y gates 304 may be controlled gates.

In some embodiments, the quantum circuit 300 may include a second unitary quantum logic gate 306 configured to implement a first cyclic shift to the prepared states of the at least two qubits to obtain a linear combination. In these and other embodiments, the second unitary quantum logic gate 306 may be represented as $S_{+1}$.

In some embodiments, the quantum circuit 300 may include a third unitary quantum logic gate 308 configured to invert the linear combination to obtain an inverted linear combination. In these and other embodiments, the third unitary quantum logic gate 308 may be represented as $P_{signflip}Y$.

In some embodiments, the quantum circuit 300 may include a fourth unitary quantum logic gate 310 configured to implement a second cyclic shift to the inverted linear combination to obtain a solution, wherein the solution is a transformed linear combination. In these and other embodiments, the fourth unitary quantum logic gate 310 may be represented as $S^\dagger_{+1}$.

In some embodiments, the quantum circuit 300 may include a fifth unitary quantum logic gate 312 configured to store the transformed linear combination on a quantum memory of a quantum computing device. In these and other embodiments, the fifth unitary quantum logic gate 312 may be represented as $U^\dagger_{prepare}$.

In these and other embodiments, the quantum circuit 300 may provide an advantage over other quantum circuits configured for integral probability extraction as the quantum circuit 300 may avoid the oracle workspace needed for general sparse matrix implementation. For example, the quantum circuit 300 may provide the advantages included above in Table 1. In some embodiments, the quantum circuit 300 may provide an advantage by being implementable on a quantum computing device with less than 100 qubits. In some embodiments, the quantum circuit 300 may provide an advantage by being implementable on a quantum computing device with less than 75 qubits. In some embodiments, the quantum circuit 300 may provide an advantage by being implantable on a quantum computing device with less than 50 qubits. In some embodiments, operators of a quantum algorithm implemented by the quantum circuit 300 may use various numbers of qubits. For example, Table 2 below includes example operators and corresponding qubits that may be used in some embodiments.

Table 2.

| Operator | Qubits at first level block-encoding | Qubits at second level block-encoding |
|---|---|---|
| Inverse of first part of first time derivative | 1 | 0 |
| Discretized of time derivative | 2 | 0 |
| First part of second ratio derivative | $[\log_2(n_\eta+1)]$ | 0 |
| Second part of second ratio derivative | $[\log_2(n_\eta+1)]$ | 0 |
| Discretized time derivative and discretized second ratio derivative | 0 | 1 |
| Inverse of fast-forward-able matrix | 0 | 1 |

With respect to Table 2, $n_\eta$ may correspond to the number of qubits used to store a solution on the quantum memory of the quantum computing device (e.g., to store the solution on $2^{n_\eta}$ points on the domain of the variable $\eta$, the ratio variable $I/ST$).

Modifications, additions, or omissions may be made to quantum circuit 300 without departing from the scope of the disclosure. For example, one or more quantum logic gates may be added or removed from the quantum circuit 300.

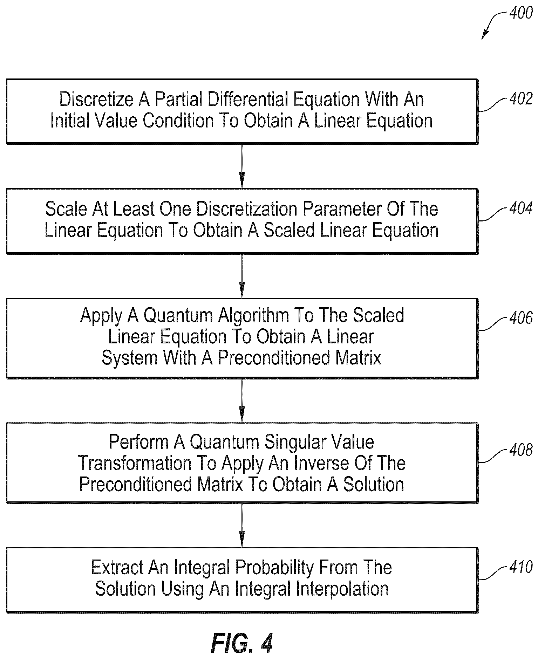

FIG. 4 is a flowchart of an example method 400 of integral probability extraction, according to one or more embodiments of the present disclosure. The method 400 may be performed by any suitable system, apparatus, or device. For example, the classical computing device 204, the quantum computing device 208, and/or the quantum circuit 214 may perform one or more of the operations associated with the method 400. Although illustrated with discrete blocks, the steps and operations associated with one or more of the blocks of the method 400 may be divided into additional blocks, combined into fewer blocks, or eliminated, depending on the particular implementation.

The method 400 may begin at block 402, where a partial differential equation with an initial value condition may be discretized to obtain a linear equation. In these and other embodiments, the partial differential equation may correspond to the Black-Scholes model. For example, the partial differential equation may be a Black-Scholes equation to price Asian financial options. In some embodiments, discretizing the partial differential equation may include applying a central difference operator and/or at least one Dirichlet boundary condition. For example, block 402 may include discretizing the time derivative $\frac{\partial \psi}{\partial \tau_1}$ of a Black-Scholes equation (e.g., Equation 1 above) to obtain $\tilde{C}_{\tau_1}$ (e.g., Equation 3 above) using the central difference operator and Dirichlet's boundary conditions. For example, block 402 my include implementing $\tilde{C}_{\tau_1}$ by splitting $\tilde{C}_{\tau_1}$ into two terms using periodic boundary conditions and unitaries and canceling non-zero corner elements to fall back into the Dirichlet boundary condition case. In some embodiments, the block 402 may also include discretizing the second payoff derivative $-\frac{1}{2}\sigma^2\eta^2\frac{\partial^2 \psi}{\partial \eta^2}$ to obtain $\tilde{C}_{\eta,1}$ and/or discretizing the first payoff derivative $-\left(\frac{W(\tau_1)}{T} - (r-q)\eta\right)\frac{\partial \psi}{\partial \eta}$ to obtain $\tilde{C}_{\eta,2}$.

At block 404, at least one discretization parameter of the linear equation may be scaled to obtain a scaled linear equation. In some embodiments, scaling may include transforming at least one variable of the linear equation using a scalar (e.g., multiplying by a constant). For example, the linear equation may be scaled by a factor of $\delta_{\tau_1}$, wherein $\delta_{\tau_1}$ is the matrix spacing of the discretized time derivative of Equation 1. In some embodiments, block 404 may also include using fast inversion and/or pre-conditioning to implement $\tilde{C}_{\eta,1}$ and $\tilde{C}_{\eta,2}$ using two-layered block-encoding.

At block 406, a quantum algorithm may be applied to the scaled linear equation to obtain a linear system with a preconditioned matrix. In some embodiments, the quantum algorithm may be a HHL algorithm. In these and other embodiments, the quantum algorithm may be applied to the scaled linear equation using a quantum computing device by encoding the scaled linear equation as a quantum state, utilizing quantum phase estimation to estimate the eigenvalues of the matrix involves, and/or performing controlled rotations based on the eigenvalues to obtain a preconditioned matrix.

At block 408, a QSVT may be used to apply an inverse of the preconditioned matrix to obtain a solution. In some embodiments, the QSVT may be implemented by a quantum circuit of a quantum computing device. In some embodiments, the quantum circuit may include at least one quantum logic gate that may act on a single qubit. In some embodiments, the quantum circuit may include at least four qubits, a first unitary quantum logic gate configured to prepare states of at least two qubits of the at least four qubits, a second unitary quantum logic gate configured to implement a first cyclic shift to the prepared states of the at least two qubits to obtain a linear combination, a third unitary quantum logic gate configured to invert the linear combination, a fourth unitary quantum logic gate configured to implement a second cyclic shift to the at least two qubits to obtain a transformed linear combination, and/or a fifth unitary quantum logic gate configured to store the transformed linear combination (e.g., the solution) on a quantum memory of the quantum computing device. In some embodiments, the QSVT may use the quantum circuit to encode matrices as unitary operators. In some embodiments, the quantum computing device may include a qubit count of $\tilde{O}(\text{polylog}(1/\varepsilon))$ or $\tilde{O}((1/\varepsilon))$, wherein $\varepsilon$ represents additive error of the solution.

At block 410, an integral probability may be extracted from the solution using an integral interpolation. In some embodiments, the solution may be stored in the quantum memory of the quantum computing device. In these and other embodiments, extracting the integral probability may include obtaining a probability amplitude by iteratively measuring a corresponding wavefunction for the given quantum state of the solution such that the absolute value of a complex number representing that quantum state may be calculated to a specified confidence level. For example, extracting the integral probability may include extracting an amplitude from the amplitudes $\Psi(\tau_1,\eta) = \iint \psi^2 \, d\eta \, d_{\tau_1}$ from the quantum memory of a quantum computing device at the Chebyshev nodes for $\tau_1$ and $\eta$. In some embodiments, block 410 may also include performing an interpolation of $\Psi$ with the extracted amplitudes, differentiating the interpolant of $\Psi$ with respect to $\eta$ and $\tau_1$ to obtain an approximation of $\psi^2$, shifting the approximation of $\psi^2$ so that it is positive, and/or taking the square root of the approximation of $\psi^2$ to estimate $\psi(\tau_1, \eta)$. In some embodiments, to obtain the integral probability of observing a particular state, the absolute value of the probability amplitude may be squared (e.g., as in the Born rule).

Modifications, additions, or omissions may be made to the method 400 without departing from the scope of the disclosure. For example, the designations of different elements in the manner described is meant to help explain concepts described herein and is not limiting. Further, the method 400 may include any number of other elements or may be implemented within other systems or contexts than those described. For example, the method 400 may further include pricing at least one financial option using the integral probability. In some embodiments, the method 400 may provide a quantum advantage for extracting integral probabilities compared to classical methods such as quantum-inspired sampling, time-domain sub-sampling, and/or classical Monte-Carlo integration. In some embodiments, the method 400 may provide an exponential advantage for extracting integral probabilities compared to traditional quantum methods such as valuation tree, semi-digital encoding, quantized sub-sampling, and/or quantum Monte-Carlo integration.

FIG. 5 is an example computing system 500 according to one or more embodiments of the present disclosure. The computing system 500 may include a processor 502, a memory 504, a data storage 506, and/or a communication unit 508, which all may be communicatively coupled. For example, the operating environment 100 of FIG. 1 may be implemented as a computing system consistent with the computing system 500. As another example, the classical computing device 204 and/or the quantum computing device 208 of FIG. 2 may include one or more components of the computing system 500.

Generally, the processor 502 may include any suitable special-purpose or general-purpose computer, computing entity, or processing device including various computer hardware or software modules and may be configured to execute instructions stored on any applicable computer-readable storage media. For example, the processor 502 may include a microprocessor, a microcontroller, a digital signal processor (DSP), an application-specific integrated circuit (ASIC), a Field-Programmable Gate Array (FPGA), or any other digital or analog circuitry configured to interpret and/or to execute program instructions and/or to process data.

Although illustrated as a single processor in FIG. 5, it is understood that the processor 502 may include any number of processors distributed across any number of network or physical locations that are configured to perform individually or collectively any number of operations described in the present disclosure. In some embodiments, the processor 502 may interpret and/or execute program instructions and/or process data stored in the memory 504, the data storage 506, or the memory 504 and the data storage 506. In some embodiments, the processor 502 may fetch program instructions from the data storage 506 and load the program instructions into the memory 504.

After the program instructions are loaded into the memory 504, the processor 502 may execute the program instructions, such as instructions to cause the computing system 500 to perform some of the operations of the method 400 of FIG. 4. For example, the computing system 500 may execute the program instructions to discretize, scale, extract, etc.

The memory 504 and the data storage 506 may include computer-readable storage media or one or more computer-readable storage mediums for having computer-executable instructions or data structures stored thereon. Such computer-readable storage media may be any available media that may be accessed by a general-purpose or special-purpose computer, such as the processor 502. In some embodiments, the computing system 500 may or may not include either of the memory 504 and the data storage 506.

By way of example, and not limitation, such computer-readable storage media may include non-transitory computer-readable storage media including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices), or any other storage medium which may be used to store desired program code in the form of computer-executable instructions or data structures and which may be accessed by a general-purpose or special-purpose computer. Combinations of the above may also be included within the scope of computer-readable storage media. Computer-executable instructions may include, for example, instructions and data configured to cause the processor 502 to perform a particular operation or group of operations.

The communication unit 508 may include any component, device, system, or combination thereof that is configured to transmit or receive information over a network. In some embodiments, the communication unit 508 may communicate with other devices at other locations, the same location, or even other components within the same system. For example, the communication unit 508 may include a modem, a network card (wireless or wired), an optical communication device, an infrared communication device, a wireless communication device (such as an antenna), and/or chipset (such as a Bluetooth device, an 802.6 device (e.g., Metropolitan Area Network (MAN)), a WiFi device, a WiMax device, cellular communication facilities, or others), and/or the like. The communication unit 508 may permit data to be exchanged with a network and/or any other devices or systems described in the present disclosure. For example, the communication unit 508 may allow the computing system 500 to communicate with other systems, such as computing devices and/or other networks.

One skilled in the art, after reviewing this disclosure, may recognize that modifications, additions, or omissions may be made to the computing system 500 without departing from the scope of the present disclosure. For example, the computing system 500 may include more or fewer components than those explicitly illustrated and described.

The foregoing disclosure is not intended to limit the present disclosure to the precise forms or particular fields of use disclosed. As such, it is contemplated that various alternate embodiments and/or modifications to the present disclosure, whether explicitly described or implied herein, are possible in light of the disclosure. Having thus described embodiments of the present disclosure, it may be recognized that changes may be made in form and detail without departing from the scope of the present disclosure. Thus, the present disclosure is limited only by the claims.

In some embodiments, the different components, modules, engines, and services described herein may be implemented as objects or processes that execute on a computing system (e.g., as separate threads). While some of the systems and methods described herein are generally described as being implemented in software (stored on and/or executed by general purpose hardware), specific hardware implementations or a combination of software and specific hardware implementations are also possible and contemplated.

In accordance with common practice, the various features illustrated in the drawings may not be drawn to scale. The illustrations presented in the present disclosure are not meant to be actual views of any particular apparatus (e.g., device, system, etc.) or method, but are merely idealized representations that are employed to describe various embodiments of the disclosure. Accordingly, the dimensions of the various features may be arbitrarily expanded or reduced for clarity. In addition, some of the drawings may be simplified for clarity. Thus, the drawings may not depict all of the components of a given apparatus (e.g., device) or all operations of a particular method.

Terms used herein and especially in the appended claims (e.g., bodies of the appended claims) are generally intended as "open" terms (e.g., the term "including" should be interpreted as "including, but not limited to," the term "having" should be interpreted as "having at least," the term "includes" should be interpreted as "includes, but is not limited to," etc.).

Additionally, if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations.

In addition, even if a specific number of an introduced claim recitation is explicitly recited, it is understood that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." or "one or more of A, B, and C, etc." is used, in general such a construction is intended to include A alone, B alone, C alone, A and B together, A and C together, B and C together, or A, B, and C together, etc. For example, the use of the term "and/or" is intended to be construed in this manner.

Further, any disjunctive word or phrase presenting two or more alternative terms, whether in the description, claims, or drawings, should be understood to contemplate the possibilities of including one of the terms, either of the terms, or both terms. For example, the phrase "A or B" should be understood to include the possibilities of "A" or "B" or "A and B."

Additionally, the use of the terms "first," "second," "third," etc., are not necessarily used herein to connote a specific order or number of elements. Generally, the terms "first," "second," "third," etc., are used to distinguish between different elements as generic identifiers. Absence a showing that the terms "first," "second," "third," etc., connote a specific order, these terms should not be understood to connote a specific order. Furthermore, absence a showing that the terms first," "second," "third," etc., connote a specific number of elements, these terms should not be understood to connote a specific number of elements. For example, a first widget may be described as having a first side and a second widget may be described as having a second side. The use of the term "second side" with respect to the second widget may be to distinguish such side of the second widget from the "first side" of the first widget and not to connote that the second widget has two sides.

All examples and conditional language recited herein are intended for pedagogical objects to aid the reader in understanding the invention and the concepts contributed by the inventor to furthering the art and are to be construed as being without limitation to such specifically recited examples and conditions. Although embodiments of the present disclosure have been described in detail, it should be understood that the various changes, substitutions, and alterations could be made hereto without departing from the spirit and scope of the present disclosure.

**Claims**

1. A method, comprising:

   discretizing a partial differential equation with an initial value condition to obtain a linear equation;
   scaling at least one discretization parameter of the linear equation to obtain a scaled linear equation;
   applying a quantum algorithm to the scaled linear equation to obtain a linear system with a preconditioned matrix;
   perform a quantum singular value transformation using a quantum circuit in a quantum computing device to apply an inverse of the preconditioned matrix to obtain a solution; and
   extracting an integral probability from the solution using an integral interpolation.

2. The method of claim 1, wherein the quantum circuit comprises:

   at least four qubits;
   a first unitary quantum logic gate configured to prepare states of at least two qubits of the at least four qubits;
   a second unitary quantum logic gate configured to implement a first cyclic shift to the prepared states of the at least two qubits to obtain a linear combination;
   a third unitary quantum logic gate configured to invert the linear combination;
   a fourth unitary quantum logic gate configured to implement a second cyclic shift to the inverted linear combination on the at least two qubits to obtain the solution, wherein the solution is a transformed linear combination; and
   a fifth unitary quantum logic gate configured to store the transformed linear combination on a quantum memory of the quantum computing device.

3. The method of claim 1 or claim 2, wherein:

   the quantum computing device includes a qubit count of $\tilde{O}(\text{polylog}(1/\varepsilon))$, wherein $\varepsilon$ represents additive error of the solution; or
   the quantum computing device includes a qubit count of $\tilde{O}((1/\varepsilon))$, wherein $\varepsilon$ represents additive error of the solution.

4. The method of any of claims 1 to 3, wherein:

   the method further comprises pricing at least one financial option using the integral probability; and/or
   the method provides a quantum advantage for extracting integral probabilities compared to classical methods; and/or
   the method provides an exponential advantage for extracting integral probabilities compared to traditional quantum methods.

5. The method of any of the preceding claims, wherein the partial differential equation corresponds to a Black-Scholes model.

6. The method of any of the preceding claims, wherein discretizing the partial differential equation includes applying a central difference operator and at least one Dirichlet boundary condition.

7. The method of any of the preceding claims, wherein the quantum algorithm is a Harrow-Hassidim-Lloyd algorithm.

8. A system comprising:

one or more processors; and
one or more non-transitory computer readable storage media configured to store instructions that, in response to being executed, cause the system to perform operations, the operations comprising:

discretize a partial differential equation with an initial value condition to obtain a linear equation;
scale at least one discretization parameter of the linear equation to obtain a scaled linear equation;
apply a quantum algorithm to the scaled linear equation to obtain a linear system with a preconditioned matrix;
perform a quantum singular value transformation using a quantum circuit in a quantum computing device to apply an inverse of the preconditioned matrix to obtain a solution; and
extract an integral probability from the solution using an integral interpolation.

9. The system of claim 8, wherein the quantum circuit includes:

at least four qubits;
a first unitary quantum logic gate configured to prepare states of at least two qubits of the at least four qubits;
a second unitary quantum logic gate configured to implement a first cyclic shift to the prepared states of the at least two qubits to obtain a linear combination;
a third unitary quantum logic gate configured to invert the linear combination;
a fourth unitary quantum logic gate configured to implement a second cyclic shift to the inverted linear combination on the at least two qubits to obtain the solution, wherein the solution is a transformed linear combination; and
a fifth unitary quantum logic gate configured to store the transformed linear combination on a quantum memory of the quantum computing device.

10. The system of claim 8 or claim 9, wherein:

the quantum computing device includes a qubit count of $\tilde{O}(\text{polylog}(1/\varepsilon))$, wherein $\varepsilon$ represents additive error of the solution; or
the quantum computing device includes a qubit count of $\tilde{O}((1/\varepsilon))$, wherein $\varepsilon$ represents additive error of the solution.

11. The system of any of claims 8 to 10, wherein:

the operations further comprise pricing at least one financial option using the integral probability; and/or
the system provides a quantum advantage for extracting integral probabilities compared to classical methods.

12. The system of any of claims 8 to 11, wherein the system provides an exponential advantage for extracting integral probabilities compared to traditional quantum methods.

13. The system of any of claims 8 to 12, wherein the partial differential equation corresponds to a Black-Scholes model.

14. One or more non-transitory computer-readable storage media configured to store instructions that, in response to being executed, cause a system to perform operations, the operations comprising:

discretize a partial differential equation with an initial value condition to obtain a linear equation;
scale at least one discretization parameter of the linear equation to obtain a scaled linear equation;
apply a quantum algorithm to the scaled linear equation to obtain a linear system with a preconditioned matrix;
perform a quantum singular value transformation using a quantum circuit in a quantum computing device to apply an inverse of the preconditioned matrix to obtain a solution; and
extract an integral probability from the solution using an integral interpolation.

15. The one or more non-transitory computer-readable storage media of claim 14, the quantum circuit including:

at least four qubits;
a first unitary quantum logic gate configured to prepare states of at least two qubits of the at least four qubits;
a second unitary quantum logic gate configured to implement a first cyclic shift to the prepared states of the at least two qubits to obtain a linear combination;
a third unitary quantum logic gate configured to invert the linear combination;

a fourth unitary quantum logic gate configured to implement a second cyclic shift to the inverted linear combination on the at least two qubits to obtain the solution, wherein the solution is a transformed linear combination; and a fifth unitary quantum logic gate configured to store the transformed linear combination on a quantum memory of the quantum computing device.

FIG. 1

EP 4 756 683 A1

FIG. 2

EP 4 756 683 A1

**FIG. 3**

EP 4 756 683 A1

400

Discretize A Partial Differential Equation With An
Initial Value Condition To Obtain A Linear Equation 402

Scale At Least One Discretization Parameter Of The
Linear Equation To Obtain A Scaled Linear Equation 404

Apply A Quantum Algorithm To The Scaled
Linear Equation To Obtain A Linear
System With A Preconditioned Matrix 406

Perform A Quantum Singular Value
Transformation To Apply An Inverse Of The
Preconditioned Matrix To Obtain A Solution 408

Extract An Integral Probability From The
Solution Using An Integral Interpolation 410

*FIG. 4*

Computing System
*500*

Processor
*502*

Memory
*504*

Data Storage
*506*

Communication Unit
*508*

*FIG. 5*

Europäisches
Patentamt

European
Patent Office

Office européen
des brevets

## EUROPEAN SEARCH REPORT

**Application Number**

EP 25 21 9188

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YU TONG ET AL: "Fast inversion, preconditioned quantum linear system solvers, and fast evaluation of matrix functions", ARXIV.ORG, CORNELL UNIVERSITY LIBRARY, 201 OLIN LIBRARY CORNELL UNIVERSITY ITHACA, NY 14853, 28 September 2021 (2021-09-28), XP091044158, DOI: 10.1103/PHYSREVA.104.032422 * abstract * * chapters 1-3; page 1 - page 19; figures 1, 2 * * section 4.3.3; page 26 - page 27 * * chapter 5; page 27 - page 36; figure 3 * * appendix D; page 51 - page 52 * ----- | 1-15 | INV.<br>G06N10/60<br>G06N5/01<br>G06F17/11<br>G06N10/20<br>G06N10/40 |
| A | NOAH LINDEN ET AL: "Quantum vs. classical algorithms for solving the heat equation", ARXIV.ORG, CORNELL UNIVERSITY LIBRARY, 201 OLIN LIBRARY CORNELL UNIVERSITY ITHACA, NY 14853, 14 April 2020 (2020-04-14), XP081643688, * abstract * * introduction and chapter I; page 1 - page 10 * ----- -/-- | 1-15 | **TECHNICAL FIELDS SEARCHED (IPC)**<br><br>G06N<br>G06F |

The present search report has been drawn up for all claims

| Place of search | Date of completion of the search | Examiner |
|---|---|---|
| The Hague | 6 March 2026 | Hasnas, Sergiu |

EPO FORM 1503 03.82 (P04C01)

page 1 of 2

# EP 4 756 683 A1

## EUROPEAN SEARCH REPORT

Europäisches Patentamt
European Patent Office
Office européen des brevets

**Application Number**

EP 25 21 9188

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MAURO E S MORALES ET AL: "Quantum Linear System Solvers: A Survey of Algorithms and Applications", ARXIV.ORG, CORNELL UNIVERSITY LIBRARY, 201 OLIN LIBRARY CORNELL UNIVERSITY ITHACA, NY 14853, 4 November 2024 (2024-11-04), XP091924784, * abstract * * chapter I; page 3 - page 4; figure 1 * * chapter IV; page 8 - page 25; figures 5-6 * ----- | 1-15 | |
| | | | **TECHNICAL FIELDS SEARCHED (IPC)** |

The present search report has been drawn up for all claims

| Place of search | Date of completion of the search | Examiner |
|---|---|---|
| The Hague | 6 March 2026 | Hasnas, Sergiu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

21